# EUROPÄISCHE PATENTSCHRIFT

(11) **EP 2 984 740 B1**
(45) Veröffentlichungstag und Bekanntmachung des Hinweises auf die Patenterteilung: **01.03.2017**
(21) Anmeldenummer: 14709540.0
(22) Anmeldetag: 28.01.2014
(51) Int. Cl.: H02K 1/28, H02K 1/27

(54) **PERMANENTMAGNETROTOR FÜR EINEN ELEKTRONISCH KOMMUTIERTEN GLEICHSTROMMOTOR**
PERMANENT MAGNET ROTOR FOR AN ELECTRONICALLY COMMUTATED DC MOTOR
ROTOR À AIMANT PERMANENT POUR UN MOTEUR À COURANT CONTINU COMMUTÉ ÉLECTRONIQUEMENT

(30) Priorität: 11.04.2013 DE 102013206438
(43) Veröffentlichungstag der Anmeldung: 17.02.2016
(73) Patentinhaber: Bühler Motor GmbH, 90459 Nürnberg (DE)
(72) Erfinder: SCHREIBER, Thomas, 92342 Freystadt (DE); BONK, Georg, 90522 Oberasbach (DE)
(86) Internationale Anmeldenummer: PCT/DE2014/200031
(87) Internationale Veröffentlichungsnummer: WO 2014/166485

(56) Entgegenhaltungen:
- JP-A- 2004 120 829
- JP-A- 2004 328 963
- JP-A- 2010 233 413

## Beschreibung

Die Erfindung betrifft einen Permanentmagnetrotor (1) für einen elektronisch kommutierten Gleichstrommotor, mit einer Welle (2), einem von der Welle getragenen Rotorblechpaket (3, 3'), welches nahe seiner Peripherie vollumfänglich geschlossene und sich tangential erstreckende rechteckige Ausnehmungen (4) zur Aufnahme von ebenen Permanentmagnetplatten (5, 5', 5") aufweist, jeweils zumindest eine Permanentmagnetplatte (5, 5', 5") in jeder Ausnehmung aufgenommen ist, die Permanentmagnetplatten (5, 5', 5") durch Federelemente (6, 6', 6") spielfrei mit Kraftschluss gehalten sind, die Ausnehmungen (4) in tangentialer Richtung an die Permanentmagnetplatten (5, 5', 5") anschließende Freiräume (7) aufweisen, welche sich über den größten Teil der Seitenflächen (8) der Permanentmagnetplatten (5, 5', 5") erstrecken und das Rotorblechpaket (3, 3') im Wesentlichen aus einem radial äußeren Ringbereich (9) und einem radial inneren Kernbereich besteht, wobei der Ringbereich (9) zu einem großen Teil durch die Ausnehmungen (4) und die Freiräume (7, 7') begrenzt ist und mit dem Kernbereich (10) über dünne radiale Stege (11) einstückig ist, die Federelemente (6, 6', 6") einzeln in einem Teil der in tangentialer Richtung an die Permanentmagnetplatten (5, 5', 5") anschließenden Freiräumen (7) aufgenommen sind, die Federkraft der Federelemente (6, 6', 6") überwiegend tangential auf Seitenflächen (8) der Permanentmagnetplatten (5, 5', 5") wirkt und die Federelemente (6, 6', 6") einerseits an den Seitenflächen (8) einer Permanentmagnetplatte (5, 5', 5") anliegen.

Aus der WO 2007/004009 A2 ist ein gattungsgemäßer Rotor bekannt, bei dem in einem radial zu den Permanentmagnetplatten inneren Bereich des Rotorblechpakets zusätzliche Ausnehmungen, die zu den Ausnehmungen für die Permanentmagnetplatten offen sind. In diesen zusätzlichen Ausnehmungen sind jeweils Federelemente eingelegt, die eine Radiale Kraft auf die Permanentmagnetplatte nach außen ausüben. Diese bekannte Lösung hat den Nachteil, dass die Permanentmagnetplatten in tangentialer Richtung nicht eindeutig durch die Federkraft festgelegt sind, dadurch können sich die Magnete unter äußerer Belastung innerhalb der Ausnehmung rechtwinklig zur Federkraft bewegen. Die Federn haben weiter keinen Einfluss auf möglicherweise entstehende Unwuchten. Ein weiterer Nachteil besteht darin dass durch die zusätzliche Ausnehmung der magnetische Widerstand des Magnetkreises erhöht wird, weil die Ausnehmung im Hauptflussbereich angeordnet ist.

Aus der JP 2010233413 A1 ist ein Permanentmagnetrotor, geeignet für einen elektronisch kommutierten Gleichstrommotor, mit einer Welle, einem von der Welle getragenen Rotorblechpaket, welches nahe seiner Peripherie vollumfänglich geschlossene und sich tangential erstreckende rechteckige Ausnehmungen zur Aufnahme von ebenen Permanentmagnetplatten aufweist, jeweils zumindest eine Permanentmagnetplatte in jeder Ausnehmung aufgenommen ist, die Permanentmagnetplatten durch Federelemente spielfrei mit Kraftschluss gehalten sind, die Ausnehmungen in tangentialer Richtung an die Permanentmagnetplatten anschließende Freiräume aufweisen, welche sich über den größten Teil der Seitenflächen der Permanentmagnetplatten erstrecken und das Rotorblechpaket im Wesentlichen aus einem radial äußeren Ringbereich und einem radial inneren Kernbereich besteht, wobei der Ringbereich zu einem großen Teil durch Ausnehmungen und die Freiräume begrenzt ist und mit dem Kernbereich über dünne radiale Stege einstückig ist, wobei die Federelemente einzeln in einem Teil der in tangentialer Richtung an die Permanentmagnetplatten anschließenden Freiräumen aufgenommen sind, die Federkraft der Federelemente überwiegend tangential auf Seitenflächen der Permanentmagnetplatten wirkt und die Federelemente einerseits an den Seitenflächen einer Permanentmagnetplatte anliegen, bekannt.

Aus der JP 2004328963 A1 ist ein Rotor bekannt, bei dem die Magnete durch jeweils ein Federelement festgelegt sind.

Aus der JP 2004120829 A1 ist ein Roter bekannt, bei dem die Magnete mit einem elastischen Körper gegen eine Seitenwand der Magnettasche festgelegt werden und die Einbaurichtung der Magnete radial ist.

Aufgabe der Erfindung ist es daher einen Permanentmagnetrotor der eingangs genannten Gattung darzustellen, der eine sichere spielfreie Montage der Permanentmagnetplatten ermöglicht und dabei einen für diese Bauform optimalen Magnetkreis erlaubt, die Flexibilität in der Fertigung einer großen Palette von Permanentmagnetrotoren für unterschiedliche Anforderungen und Einsatzfälle beibehält, bei der Unwuchten konstruktionsbedingt minimiert werden, bei dem sowohl die Montage und auch eine eventuelle Demontage auf einfache Weise möglich ist, bei dem der Energieeinsatz bei der Herstellung gering ist und sowohl bei der Herstellung als auch bei der Entsorgung hohen Umweltstandards gerecht wird, bei dem Geräuschentwicklungen im Betrieb minimiert sind, Toleranzen, sowie Längenänderungen aufgrund Wärmedehnung kompensierbar sind, eine gute chemische Beständigkeit und Alterungsbeständigkeit aufweist, eine hohe Fertigungsgeschwindigkeit möglich ist und eine hohe mechanische Festigkeit der Verbindung zwischen Permanentmagnetplatten und Blechpaket erreichbar ist.

Diese Aufgabe wird erfindungsgemäß durch das Kennzeichen des Anspruchs 1 gelöst.

Für die Federelemente sind keine zusätzlichen Aussparungen im Rotorblechpaket erforderlich, weil sie in den bereits vorhandenen an die Permanentmagnetplatten anschließenden Freiräumen untergebracht sind, daher besteht nicht die Gefahr einer Schwächung des magnetischen Kreises und damit einer eingeschränkten Leistung des Elektromotors. Um keine magnetischen Kurzschlüsse herzustellen ist vorgesehen die Federelemente aus einem nichtmagnetischen Material herzustellen, dies ist wichtig, weil die Magneten in einem Bereich angeordnet sind, der zur Bildung eines magnetischen Widerstandes und Verhinderung eines magnetischen Kurzschlusses ausgespart ist. Durch die überwiegend tangential auf ebene Seitenflächen der Permanentmagnetplatten wirkende Federkräfte werden alle Magnete in die gleiche Richtung gedrängt oder zumindest so ausgerichtet, dass sich die Magnete symmetrisch um eine Drehachse des Permanentmagnetrotors herum anordnen, wodurch Unwuchten vermieden werden. Per Definition sollen im Sinne des Anspruchs 1 auch an die Seitenflächen anschließende Radien der Permanentmagnetplatten zu den Seitenflächen gerechnet werden. Als Abstützfläche für die Federelemente können die Stege, welche die Freiräume begrenzen, oder die Seitenflächen anderer Permanentmagnetplatten dienen. Die Federelemente bewirken eine zuverlässige sichere Halterung der Permanentmagnetplatten indem sie diese an Enden, die den Federelementen gegenüberliegen in einer radial spielfreien Lage halten. Anders als beispielsweise bei Klebeverfahren, kann das Rotorgewicht kalkulierbar in engen Grenzen reproduzierbar eingehalten werden. Weiterbildungen der Erfindung werden in den Unteransprüchen dargestellt. Es ist vorgesehen dass die Federelemente (6, 6', 6") V-förmig und/oder U-förmig gebogene Blechstreifen sind. Diese lassen sich besonders einfach herstellen und können auch bei der Montage einfach zugeführt werden, indem sie beispielsweise gegurtet als Bandmaterial zugeführt werden. Die Federn können auch über ihre Länge von einer V-förmigen in eine U-förmige Gestalt übergehen, wobei sie ein dreieckförmiges Joch aufweisen, das die Federschenkel miteinander verbindet. Diese Ausgestaltung erleichtert die Montage erheblich. Solche Blechfedern sind einfach durch Änderung der Blechdicke, des Federmaterials und der Federgeometrie an unterschiedliche Anforderungen anpassbar. Im Übrigen erlauben gebogene Blechfedern das Design der für den magnetisch optimierten Blechschnitt unverändert beizubehalten. Grundsätzlich kann der Blechschnitt bei Bedarf auch für andere Befestigungsmethoden ohne Änderungen verwendet werden. Solche Befestigungsmethoden sind z.B. Kleben, Fügen durch Urformen oder durch Umformen. Bei Bedarf können Blechfedern auch mit Formschlussmitteln versehen sein, durch welche die Magnete zusätzlich axial sicherbar sind. Identische Federn können bedingt auch für unterschiedliche Rotordurchmesser und Rotorlängen verwendet werden.

Alternativ zur V-Form bzw. U-Form sind auch C-förmige ovale oder kreisförmige bzw. von einer ovalen in eine kreisförmige Form übergehende Blechstreifen einsetzbar.

Vorteil dieser Ausführungsform ist eine kantenfreie Anlage an den Permanentmagnetplatten, somit sind Abschabungen oder Absplitterungen weitgehend vermeidbar.

Eine zweckmäßige Weiterbildung der Erfindung sieht vor, die Federelemente so zu biegen, dass die bei der Herstellung - in der Regel Scherschneiden - entstandenen Grate auf die Seite des Blechs zu verlegen, welche nicht mit den Permanentmagnetplatten in Berührung kommt. Hierdurch werden Abschabungen und Absplitterungen bei der Montage vermieden.

Eine besonders einfache Montage ist gegeben, wenn die Federelemente ausschließlich kraftschlüssig in den Freiräumen gehalten sind, das gleiche gilt auch für ausschließlich kraftschlüssig in den Ausnehmungen gehaltene Permanentmagnetplatten. Eine eventuell aus Umweltschutzgründen und aus Recyclinggründen des wertvollen Magnetmaterials erforderliche Demontage der Permanentmagnetplatten wird ebenfalls durch die ausschließlich kraftschlüssige Verbindung erleichtert. Hierbei verbessert sich auch die Wirtschaftlichkeit über den gesamten Lebenszyklus des Produkts bis hin zur Wiederverwendung von Materialien.

Bei einer ersten Ausführungsform ist vorgesehen, dass die Anzahl der Federelemente der Anzahl der Permanentmagnetplatten entspricht. In diesem Fall stützt sich jedes Federelement einerseits an einer Seitenfläche einer Permanentmagnetplatte und andererseits an einem Steg ab. Vorzugsweise werden alle Permanentmagnetplatten durch die jeweiligen Federelemente in die gleiche Richtung gedrängt und somit Unwuchten ausgeglichen und die Symmetrie des Magnetfelds aufrechterhalten.

Bei einer zweiten besonders bevorzugten Ausführungsform ist nur die halbe Anzahl Federelemente gegenüber der Anzahl der Permanentmagnetplatten vorgesehen. Bei dieser Ausführungsform ist nur jeder zweite, der bei der ersten Ausführungsform vorhanden Stege vorgesehen. Dadurch sind im montierten Zustand dann zwei Permanentmagnetplatten abwechselnd durch einen Steg oder durch ein Federelement voneinander getrennt. Die Federelemente wirken somit auf die Seitenflächen von zwei Permanentmagnetplatten ein. Üblicherweise ist die Anzahl der Permanentmagnetplatten geradzahlig, wodurch sich auch bei der zweiten Ausführungsform eine symmetrische Verteilung der Permanentmagnetplatten über den Umfang des Permanentmagnetrotors ergibt.

Es ist auch eine alternative Anordnung der Federelemente möglich, wobei eine Hauptbiegelinie der Federelemente radial nach außen gerichtet ist und die Blechschenkel nach radial innen gerichtet sind.

Weiter kann vorgesehen sein, dass die Federelemente innerhalb des Freiraums radial außen am Blechpaket anliegen.

Unabhängig von der Ausführungsform ist bei einer besonders bevorzugten Variante vorgesehen, dass kantige Querschnittsbereiche der Federelemente nicht an den ebenen Seitenflächen der Permanentmagnetplatten anliegen.

Die Federelemente bestehen vorzugsweise aus paramagnetischem oder diamagnetischem Material, wie Edelstahl, Bronze, Kupferberyllium oder paramagnetischem Federstahl. Diese Stoffe besitzen einen hohen magnetischen Widerstand und führen deshalb nicht zu magnetischen Kurzschlüssen.

Der beanspruchte Permanentmagnetrotor ist vor allem für bürstenlose Gleichstrommotoren vorgesehen, er ist aber gleichfalls auch für Synchronmotoren und andere Motortypen verwendbar.

Die Erfindung wird nachfolgend anhand von Ausführungsbeispielen näher erläutert. Es zeigen:
Fig. 1 a eine Vorderansicht einer ersten Ausführungsart eines erfindungsgemäßen Permanentmagnetrotors,
Fig. 1b eine Draufsicht des Permanentmagnetrotors aus Fig. 1 a,
Fig. 1c eine Darstellung eines Federelements,
Fig. 2a eine Stirnansicht einer ersten Variante der ersten Ausführungsform,
Fig. 2b eine Detaildarstellung von Fig. 2a,
Fig. 3a Stirnansicht einer zweiten Variante der ersten Ausführungsform,
Fig. 3c ein Schnitt durch einen Permanentmagnetrotor nach Fig. 3a,
Fig. 3d eine Detaildarstellung von Fig. 3c,
Fig. 4a eine Stirnansicht einer zweiten Ausführungsform des Erfindungsgemäßen Permanentmagnetrotors,
Fig. 4b eine Detaildarstellung von Fig. 5a,
Fig. 5a eine räumlich dargestellte Anordnung einer Variante der zweiten Ausführungsform,
Fig. 5b eine Darstellung einer Variante des Federelements,
Fig. 6a eine Stirnansicht einer zweiten Variante der zweiten Ausführungsform,
Fig. 6b eine räumliche Darstellung der Variante aus Fig. 6a,
Fig. 7 eine Darstellung eines Montagevorgangs einer Permanentmagnetplatte,
Fig. 8 eine Darstellung eines Montagevorgangs eines Federelements,
Fig. 9 eine Variante der Einbaulage des Federelements und
Fig. 10 eine dritte Variante des Federelements in einer ähnlichen Einbaulage.

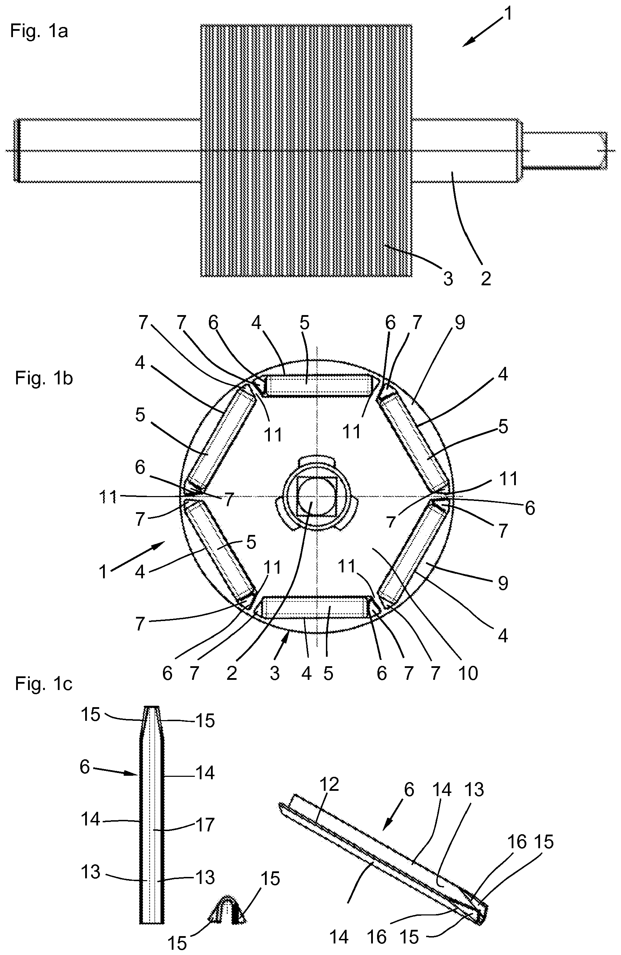

Fig. 1 a zeigt eine Vorderansicht einer ersten Ausführungsart eines erfindungsgemäßen Permanentmagnetrotors 1, bestehend aus einer Welle 2, und einem Rotorblechpaket 3. Rotorblechpakete bestehen aus dünnen Elektroblechen die untereinander isoliert sind um Wirbelströme zu unterdrücken. Das Rotorblechpaket 3 ist auf die Welle 2 aufgepresst und bildet mit dieser eine kompakte Baugruppe.

Fig. 1b zeigt eine Draufsicht des Permanentmagnetrotors aus Fig. 1a, mit der Welle 2, dem Rotorblechpaket 3, Ausnehmungen 4, Permanentmagnetplatten 5,

Freiräumen 7 und Federelementen 6. Die Ausnehmungen 4 sind so auf die Permanentmagnetplatten 5 abgestimmt, dass eine einwandfreie Montage bei einem minimalen Luftspalt möglich ist. In jedem zweiten Freiraum 7 ist ein Federelement angeordnet und drängt jeweils eine Permanentmagnetplatte 5 in einen sich verengenden Bereich der zwischen der Ausnehmung 4 und dem Freiraum 7. Da die Permanentmagnetplatten 5 nahe an der Peripherie des Permanentmagnetrotors 3 angeordnet sind, folgt die äußere Kontur des Freiraums 7 der Rotorperipherie und ist deshalb gegenüber der Aussparung abgewinkelt. Diese häufig verwendete Geometrie wird bei der vorliegenden Erfindung dazu genutzt den Magneten spielfrei zu halten. Die Kanten der Permanentmagnetplatten sind leicht abgerundet verklemmen sich daher leicht in die Verengung. Das Rotorblechpaket 3 besteht aus einem Kernbereich 10, der sich zwischen der Welle 2 und den Permanentmagnetplatten 5 erstreckt und einem äußeren Ringbereich 9, der radial außerhalb der Permanentmagnetplatten 5 angeordnet ist und mit dem Kernbereich 10 über Stege 11 einstückig ist.

Fig. 1c zeigt ein Federelement 6, das aus einem länglichen Blechstreifen besteht, das in eine V-Form gebogen oder abgekantet ist. Ein Ende des Federelements weist vorteilhafte Einführhilfen 15 auf, welche im vorliegenden Beispiel an einer schräg zur Hauptbiegelinie 17 verlaufende Knicklinie 16 nach innen gebogen ist. Die Länge der Federelemente 6 entspricht hier etwa der Länge des Rotorblechpakets 3 und der Länge der Permanentmagnetplatten 5, sie können aber auch kürzer bemessen sein. Grate 12, die beim Scherschneiden der Blechstreifen entstehen, befinden sich innen an den Innenseiten 13 von Blechschenkeln 14, so dass sie bei der Montage kein Blechmaterial abschaben können.

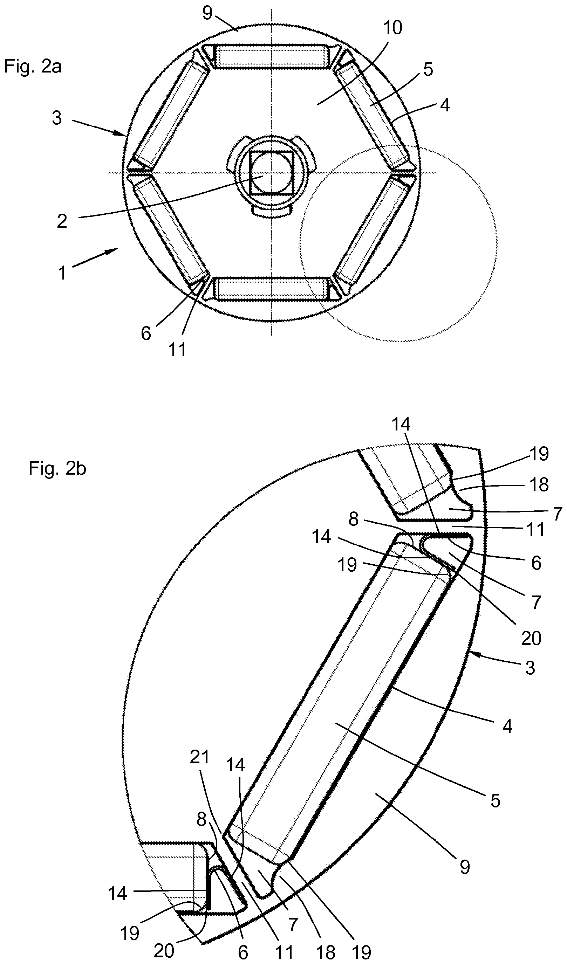

Fig. 2a zeigt eine Stirnansicht einer ersten Variante der ersten Ausführungsform des Permanentmagnetrotors 1, mit der Welle 2, dem Rotorblechpaket 3, dem Kernbereich 10, dem Ringbereich 9, den Ausnehmungen 4, den Permanentmagnetplatten 5, den Stegen 11 und den Federelementen 6.

In Fig. 2b ist ein Ausschnitt aus Fig. 2a vergrößert dargestellt. Die Permanentmagnetplatten 5 sind in den Ausnehmungen 4 aufgenommen. An einem Übergangsbereich der Ausnehmungen 4 zu einem Freiraum 7 ist an dem Ringbereich 9 des Rotorblechpakets 3 eine Ausbauchung 18 vorgesehen, welche mit einer Verrundung 19 zusammenwirkt und bei Beaufschlagung mit der Kraft des Federelements 6 in tangentialer Richtung eine Spielfreiheit der Permanentmagnetplatte 5 in radialer Richtung zur Folge hat. Grundsätzlich wäre Spielfreiheit auch durch Anlage der Verrundung 19 in einer Ecke 21 der Freisparung 7 möglich, jedoch mit geringerer Kraftkomponente in radialer Richtung. Die Ausbauchung 18 kann sowohl an der Außenseite als auch an der Innenseite oder beidseitig der Ausnehmung 4 angeordnet sein. Je flacher der Winkel im Anlagepunkt mit der Permanentmagnetplatte 5 ist, desto größer ist die Klemmwirkung. Durch die Ausbauchung 18 ist auch ein größerer Abstand der Permanentmagnetplatte 5 vom Steg 11 und damit ein größerer magnetischer Widerstand erreichbar. Die Stege 11 sind so dimensioniert, dass sie einerseits so dünn wie möglich sind, um möglichst schnell in magnetische Sättigung zu gehen und andererseits ausreichend breit um eine ausreichende Stabilität des Rotorblechpakets zu gewährleisten. Durch den Symmetrischen Aufbau gleichen sich die Fliehkräfte weitgehend aus, so dass die Stege 11 relativ dünn ausführbar sind. Die Federelemente 6 sind als V-förmig gebogene Blechstreifen ausgebildet. Die Blechschenkel 14 jedes Federelements 6 liegen einerseits an einem Steg 11 und andererseits an einer Seitenfläche 8 einer Permanentmagnetplatte 5 an. Dabei ist die Schnittkante 20 des jeweiligen Federelements 16 im Bereich einer Verrundung 19 angeordnet, so dass es nicht zu Beschädigungen der Permanentmagnetplatte 5 bei der Montage kommen kann.

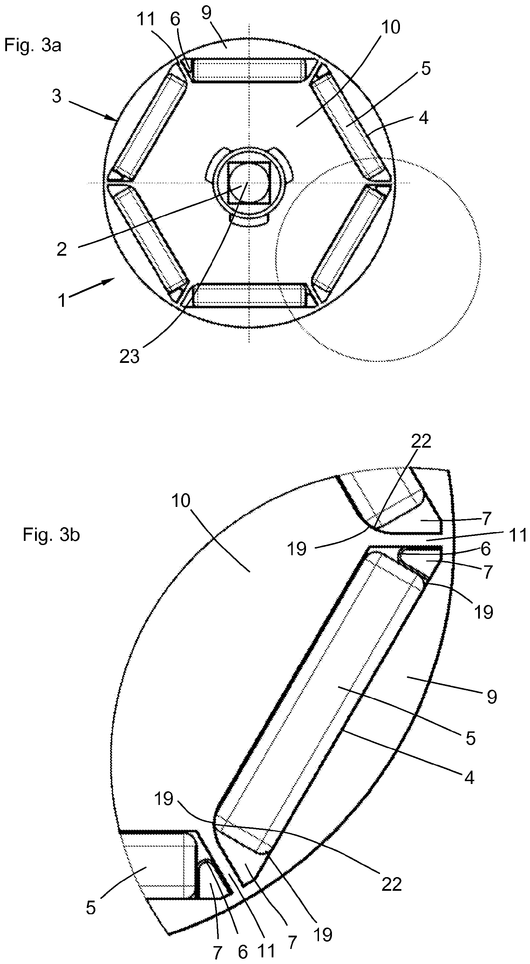

Fig. 3a zeigt eine Stirnansicht einer zweiten Variante der ersten Ausführungsform des Permanentmagnetrotors 1, mit der Welle 2, dem Rotorblechpaket 3, dem Kernbereich 10, dem Ringbereich 9, den Ausnehmungen 4, den Stegen 11, den Federlementen 6 und den Permanentmagnetplatten 5.

Fig. 3b zeigt einen vergrößerten Ausschnitt aus Fig. 3a, mit dem Kernbereich 10, dem Ringbereich 9, den Ausnehmungen 4, den Permanentmagnetplatten 5, den Federelementen 6. Statt einer Ausbauchung ist hier ein verrundeter Übergangsbereich 22 zwischen der Ausnehmung 4, der Freisparung 7 und dem Steg 11 vorgesehen. Dieser Übergangsbereich 22 hat einen ähnlichen Effekt wie die Ausbauchung aus Fig. 2a und 2b, sie bildet einen flachen Winkel im Berührungspunkt zu den Permanentmagnetplatten 5 und bewirkt damit eine radiale Spielfreiheit und Verklemmung der Permanentmagnetplatten 5 bei Beaufschlagung mit der Federkraft eines Federelements 6. Jeder Permanentmagnetplatte 6 ist genau ein Federelement 6 zugeordnet, das in jeder zweiten Freisparung 7 angeordnet ist. Vorzugsweise wirken die Federelemente 6 alle in die gleiche Richtung um die Drehachse 23 (im oder gegen den Uhrzeigersinn).

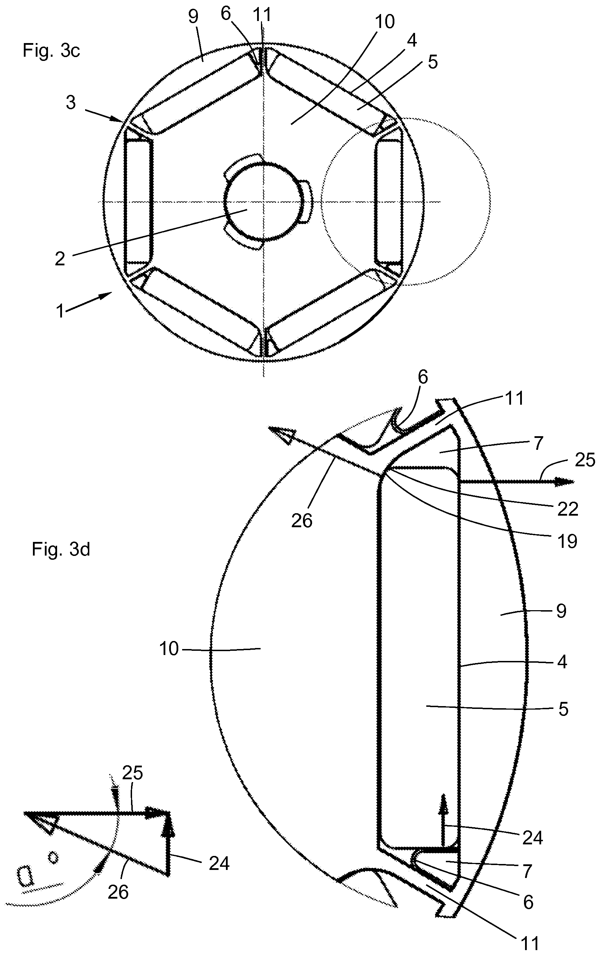

Fig. 3c zeigt einen Schnitt durch einen Permanentmagnetrotor 1 nach Fig. 3a, mit dem Rotorblechpaket 3, der Welle 2, den Ausnehmungen 4, den Permanentmagnetplatten 5, dem Kernbereich 10, dem Ringbereich 9, den Stegen 11 und den Federelementen 6 (Fig. 3c ist gegenüber Fig. 3a um 30° verdreht).

Fig. 3d zeigt einen Ausschnitt aus Fig. 3c, mit den Kraftrichtungen in Abhängigkeit von einem Winkel α, der den Winkel der Tangente an der Verrundung 19 der Permanentmagnetplatten 5 im Berührungspunkt mit dem Übergangsbereich 22 gegenüber der Federkraftrichtung in der Permanentmagnetplatte 5 darstellt. Die Federkraft 24 bewirkt eine Radialkraft 25 und eine resultierende Kraft 26.

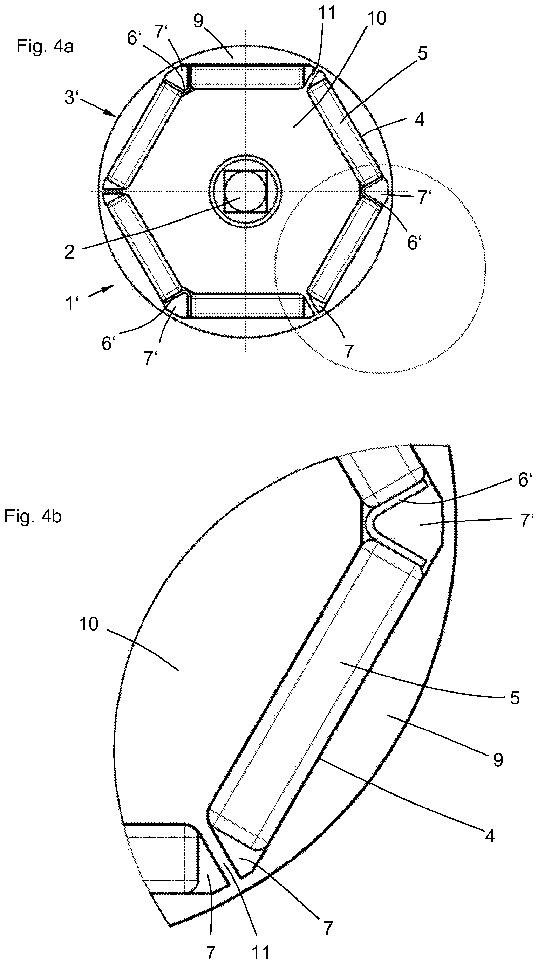

Fig. 4a und in einem vergrößerten Ausschnitt 4b zeigen eine Stirnansicht einer zweiten Ausführungsform des Erfindungsgemäßen Permanentmagnetrotors 1', wobei der wesentlichen Unterschied zu der Ersten Ausführungsform darin besteht, dass auf jeden zweiten Steg 11 und auf jedes zweite Federelement 6' verzichtet wurde. Ein Teil der ursprünglichen Freiräume 7 wurden zu einem gemeinsamen Federfreiraum 7' zusammengefasst. Die Feder 6' stützt sich hierbei nicht mehr an einen Steg ab, sondern an einer weiteren Permanentmagnetplatte 5. Der Ringbereich 9 ist im vorliegenden Beispiel über drei Stege mit dem Kernbereich 10 einstückig.

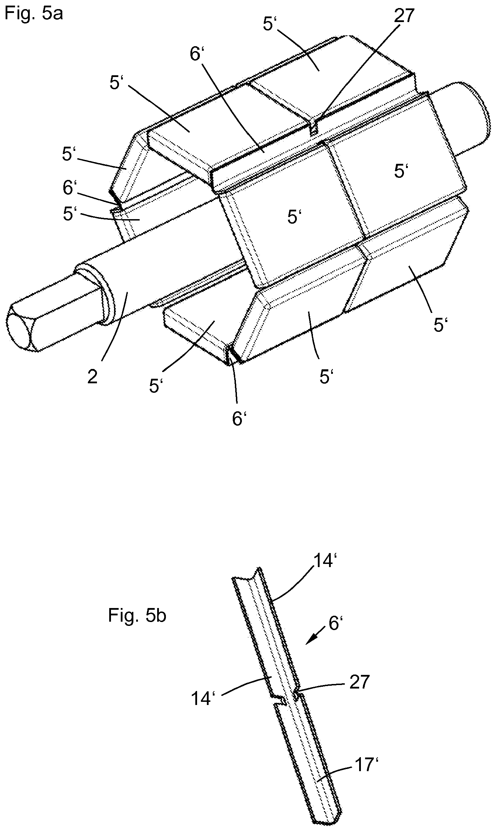

Die Permanentmagnetplatten 5 können auch aus mehreren einzelnen Platten zusammengesetzt sein, ohne den Schutzbereich der Erfindung zu verlassen. In Fig. 5a ist eine solche Anordnung einer Variante der zweiten Ausführungsform räumlich dargestellt, wobei das Rotorblechpaket nicht dargestellt ist. Gezeigt wird die Welle 2, die in axialer Richtung geteilten Permanentmagnetplatten 5', und Varianten des Federelements 6', welche durch einen Schlitz 27 geringfügigen geometrische Unterschiede zwischen den aneinander anschließenden Permanentmagnetplatten 5' ausgleichen kann.

Fig. 5b zeigt die Variante des Federelements 6' als einzelnes Teil mit dem Schlitz 27, der sich in beiden Blechschenkeln 14' über etwa 2/3 der Schenkelhöhe erstreckt. Die Schlitze 27 sind beiderseits der Hauptbiegelinie 17' angeordnet.

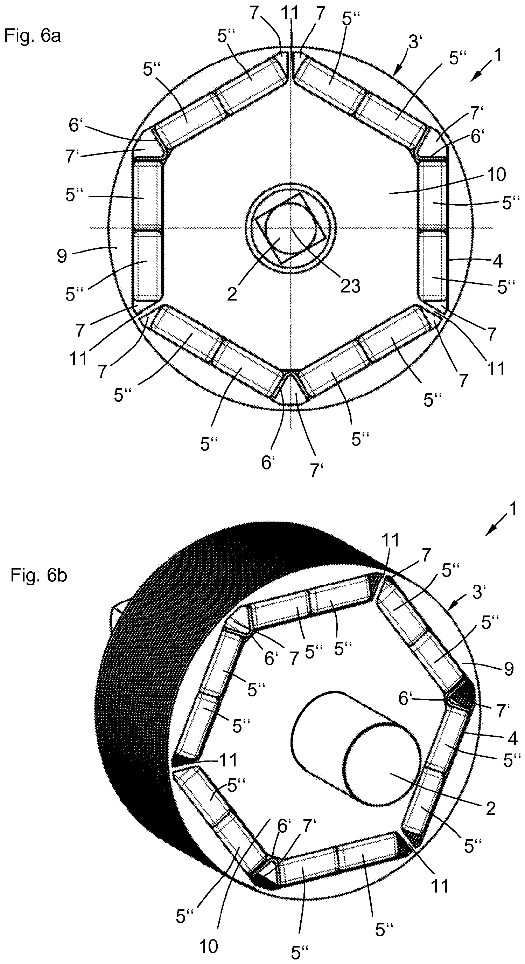

Die Permanentmagnetplatten können auch in tangentialer Richtung geteilt sein ohne den Schutzbereich der Erfindung zu verlassen. Eine solche Variante des Permanentmagnetrotors 1 zeigen die Figuren 6a und 6b als zweite Variante der zweiten Ausführungsform, mit der Welle 2, dem Rotorblechpaket 3', mit dem Kernbereich 10, dem Ringbereich 9, den Stegen 11, den Ausnehmungen 4, den Freiräumen 7 und 7', in Umfangsrichtung geteilten Permanentmagnetplatten 5" und den Federelementen 6'.

Grundsätzlich ist es auch möglich axial und im Umfangsrichtung geteilte Permanentmagnetplatten zu kombinieren.

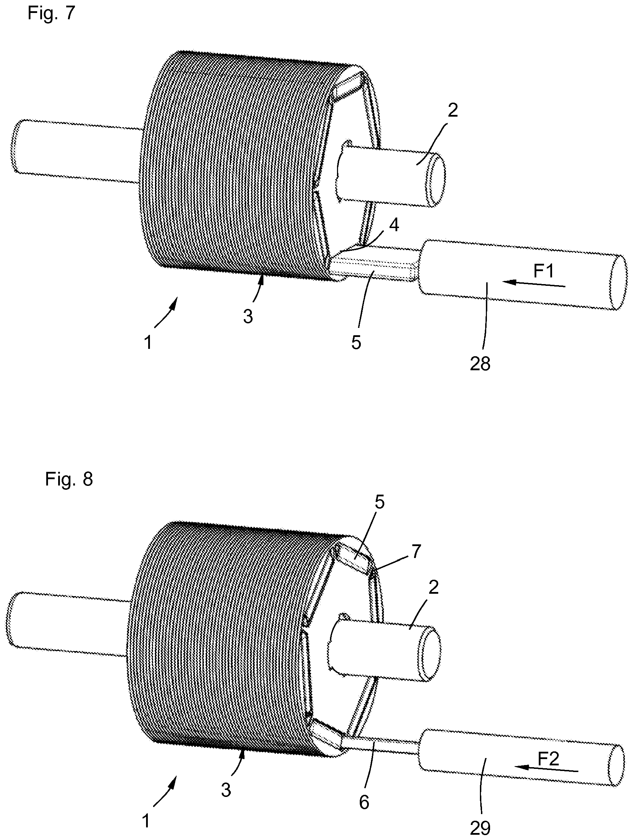

Fig. 7 zeigt eine Darstellung eines Montagevorgangs einer Permanentmagnetplatte 5 mit Hilfe eines Magneteinpressstempels 28 in eine der Ausnehmungen 4 des Rotorblechpakets 3, wobei der Magneteinpressstempel eine Kraft F1 auf die Permanentmagnetplatte 5 ausübt.

Fig. 8 zeigt eine Darstellung eines Montagevorgangs eines Federelements 6 mit Hilfe eines Federeinpressstempels 29 in den eine der Freiräume 7 des Rotorblechpakets 3, wobei der Federeinpressstempel eine Kraft F2 auf die Federelemente 6 ausübt.

Beide Einpressvorgänge können sowohl horizontal als auch vertikal durchgeführt werden.

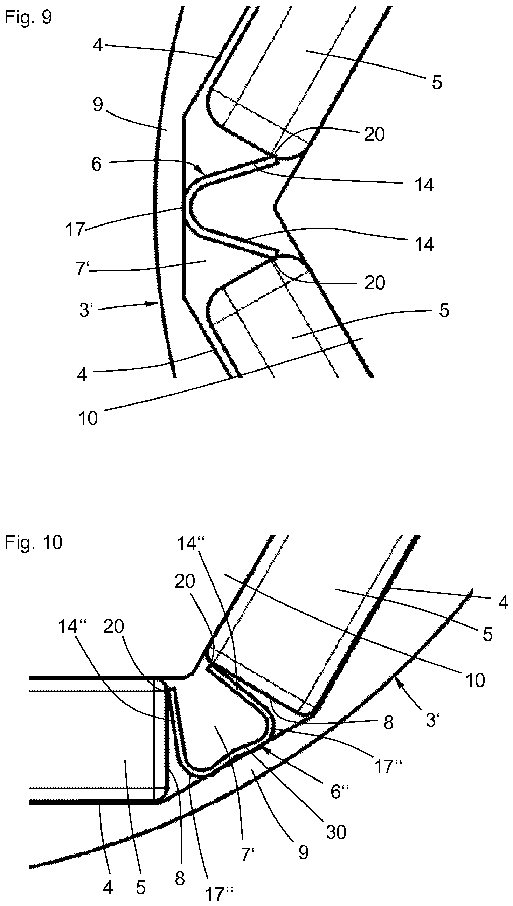

Fig. 9 zeigt eine Variante der Einbaulage des Federelements 6, wobei die Blechschenkel 14 nach innen weisen, während die Hauptbiegelinie 17 nach radial außen zeigt. Darüber hinaus liegt das Federelement 6 innerhalb des Freiraums 7' am Ringbereich 9 an. Das Federelement 6 beaufschlagt hier die Permanentmagnetplatten 5 mit ihren Schnittkanten 20 und drängt sie tangential in das gegenüber dem Freiraum 7' liegende Ende der Ausnehmung 4 Richtung.

In Fig. 10 ist eine dritte Variante des Federelements 6" im Einbauzustand dargestellt. Ähnlich wie in Fig. 9 sind auch hier die Blechschenkel 14" radial nach innen gerichtet. Das Federelement 6" ist weitgehend U-förmig ausgebildet wobei ein Joch 30 das die Blechschenkel 14" miteinander verbindet innerhalb des Freiraums 7' radial außen am Ringbereich 9 des Blechpaket 3' anliegt. Das Federelement 6" beaufschlagt zwar auch hier die Permanentmagnetplatten 5 mit ihren Schnittkanten 20, jedoch unter einem flacheren Winkel der Blechschenkel 14" zu den Seitenflächen 8 der Permanentmagnetplatten 5. Das U-förmige Federelement 6" weist zwei Hauptbiegelinien 17" auf, die nahe dem Ringbereich 9 des Blechpakets 3' angeordnet sind.

Hinweis: In der Figurenbeschreibung wurden die beiden Ausführungsformen der Erfindung, im besonderen des Rotorblechpakets mit 3 bzw. 3' bezeichnet. Die zusätzlichen Varianten, betreffend Ausbauchung 18 und Übergangsbereich 22 wurden nicht gesondert gekennzeichnet.

### Bezugszeichenliste

- 1: Permanentmagnetrotor
- 2: Welle
- 3, 3': Rotorblechpaket
- 4: Ausnehmung
- 5, 5', 5": Permanentmagnetplatte
- 6, 6', 6": Federelement
- 7, 7': Freiraum
- 8: Seitenfläche
- 9: Ringbereich
- 10: Kernbereich
- 11: Steg
- 12: Grat
- 13: Innenseite
- 14, 14', 14": Blechschenkel
- 15: Einführhilfen
- 16: Knicklinie
- 17, 17', 17": Hauptbiegelinie
- 18: Ausbauchung
- 19: Verrundung
- 20: Schnittkante
- 21: Ecke
- 22: Übergangsbereich
- 23: Drehachse
- 24: Federkraft
- 25: Radialkraft
- 26: resultierende Kraft
- 27: Schlitz
- 28: Magneteinpressstempel
- 29: Federeinpressstempel
- 30: Joch

## Patentansprüche

1. Permanentmagnetrotor (1) für einen elektronisch kommutierten Gleichstrommotor, mit einer Welle (2), einem von der Welle getragenen Rotorblechpaket (3, 3'), welches nahe seiner Peripherie vollumfänglich geschlossene und sich tangential erstreckende rechteckige Ausnehmungen (4) zur Aufnahme von ebenen Permanentmagnetplatten (5, 5', 5") aufweist, jeweils zumindest eine Permanentmagnetplatte (5, 5', 5") in jeder Ausnehmung aufgenommen ist, die Permanentmagnetplatten (5, 5', 5") durch Federelemente (6, 6', 6") spielfrei mit Kraftschluss gehalten sind, die Ausnehmungen (4) in tangentialer Richtung an die Permanentmagnetplatten (5, 5', 5") anschließende Freiräume (7, 7') aufweisen, welche sich über den größten Teil der Seitenflächen (8) der Permanentmagnetplatten (5, 5', 5") erstrecken und das Rotorblechpaket (3, 3') im Wesentlichen aus einem radial äußeren Ringbereich (9) und einem radial inneren Kernbereich besteht, wobei der Ringbereich (9) zu einem großen Teil durch die Ausnehmungen (4) und die Freiräume (7, 7') begrenzt ist und mit dem Kernbereich (10) über dünne radiale Stege (11) einstückig ist, die Federelemente (6, 6', 6") einzeln in einem Teil der in tangentialer Richtung an die Permanentmagnetplatten (5, 5', 5") anschließenden Freiräumen (7) aufgenommen sind, die Federkraft der Federelemente (6, 6', 6") überwiegend tangential auf Seitenflächen (8) der Permanentmagnetplatten (5, 5', 5") wirkt und die Federelemente (6, 6', 6") einerseits an den Seitenflächen (8) einer Permanentmagnetplatte (5, 5', 5") anliegen, **gekennzeichnet durch** die Kombination folgender Merkmale:
a) die Federelemente (6, 6', 6") bestehen aus magnetisch nichtleitendem Material,
b) die Federelemente (6, 6', 6") liegen andererseits an einem der Stege (11) oder an einer Seitenfläche (8) einer weiteren Permanentmagnetplatte (5, 5', 5") an und
c) die Permanentmagnetplatten (5, 5', 5") sind auf ihrem den Federelementen (6, 6', 6") gegenüberliegendem Ende **durch** die Federelemente (6, 6', 6") in einer in radialer Richtung spielfreien Lage gehalten.

2. Permanentmagnetrotor nach Anspruch 1, **dadurch gekennzeichnet, dass** die Federelemente (6, 6', 6") im Querschnitt V-förmige, U-förmige Blechstreifen oder von einer V-Form in eine U-Form übergehende Blechstreifen sind.

3. Permanentmagnetrotor nach Anspruch 1, **dadurch gekennzeichnet, dass** die Federelemente im Querschnitt C-förmige ovale oder kreisförmige Blechstreifen oder von einer ovalen Form in eine Kreisform übergehende Blechstreifen sind.

4. Permanentmagnetrotor nach Anspruch 2 oder 3, **dadurch gekennzeichnet, dass** sich Grate (12), die bei der Herstellung der Federelemente (6, 6', 6") entstanden sind, auf der Innenseite (13) der Blechstreifen befinden.

5. Permanentmagnetrotor nach Anspruch 1, 2, 3 oder 4, **dadurch gekennzeichnet, dass** die Federelemente (6, 6', 6") ausschließlich kraftschlüssig in den Freiräumen gehalten sind.

6. Permanentmagnetrotor nach Anspruch 1, 2, 3, 4 oder 5, **dadurch gekennzeichnet, dass** die Permanentmagnetplatten (5, 5', 5") ausschließlich kraftschlüssig in den Ausnehmungen (4) gehalten sind.

7. Permanentmagnetrotor nach zumindest einem der vorangehenden Ansprüche, **dadurch gekennzeichnet, dass** die Anzahl der Federelemente (6, 6', 6") der Anzahl der Permanentmagnetplatten (5, 5', 5") entspricht.

8. Permanentmagnetrotor nach zumindest einem der vorangehenden Ansprüche außer Anspruch 5, **dadurch gekennzeichnet, dass** die Anzahl der Federelemente (6, 6', 6") der halben Anzahl der Permanentmagnetplatten (5, 5', 5") entspricht.

9. Permanentmagnetrotor nach Anspruch 8, **dadurch gekennzeichnet, dass** die Anzahl der Stege (11) der halben Anzahl der Permanentmagnetplatten (5, 5', 5") entspricht.

10. Permanentmagnetrotor nach Anspruch 9, **dadurch gekennzeichnet, dass** zwei Permanentmagnetplatten (5, 5', 5") abwechselnd durch einen Steg (11) oder durch ein Federelement (6, 6', 6") voneinander getrennt sind.

11. Permanentmagnetrotor nach zumindest einem der vorangehenden Ansprüche, **dadurch gekennzeichnet, dass** eine Hauptbiegelinie (17, 17") der Federelemente (6, 6', 6") nach radial außen gerichtet ist und die Blechschenkel (14") nach radial innen gerichtet sind.

12. Permanentmagnetrotor nach Anspruch 11, **dadurch gekennzeichnet, dass** die Federelemente (6, 6', 6") innerhalb des Freiraums (7, 7') radial außen am Blechpaket anliegen.

13. Permanentmagnetrotor nach zumindest einem der vorangehenden Ansprüche, **dadurch gekennzeichnet, dass** kantige Querschnittsbereiche der Federelemente (6, 6') nicht an den ebenen Seitenflächen (8) der Permanentmagnetplatten (5, 5', 5") anliegen.

14. Permanentmagnetrotor nach zumindest einem der vorangehenden Ansprüche, **dadurch gekennzeichnet, dass** die Kanten der Permanentmagnetplatten (5, 5', 5") mit Verrundungen oder Fasen versehen sind.

15. Permanentmagnetrotor nach zumindest einem der vorangehenden Ansprüche, **dadurch gekennzeichnet, dass** die Federelemente (6, 6', 6") aus Edelstahl, Bronze, Kuferberyllium, oder paramagnetischem Federstahl bestehen.

16. Elektromotor mit einem Permanentmagnetrotor nach zumindest einem der vorangehenden Ansprüche.

## Claims

1. A permanent-magnet rotor (1) for an electronically commutated DC motor, with a shaft (2), a laminated rotor core (3, 3') borne by the shaft, which core, close to its periphery, has rectangular recesses (4), which are closed over their full extent and are tangentially extending, for receiving flat permanent-magnet plates (5, 5', 5"), in each case at least one permanent-magnet plate (5, 5', 5") is received in each recess, the permanent-magnet plates (5, 5', 5") are held without play in a non-positive connection by spring elements (6, 6', 6"), the recesses (4) in the tangential direction have free spaces (7, 7') adjoining the permanent-magnet plates (5, 5', 5"), which free spaces extend over the major part of the side faces (8) of the permanent-magnet plates (5, 5', 5"), and the laminated rotor core (3, 3') consists substantially of a radially outer ring region (9) and a radially inner core region, wherein the ring region (9) is to a great extent defined by the recesses (4) and the free spaces (7, 7') and is in one piece with the core region (10) via thin radial lands (11), the spring elements (6, 6', 6") are received individually in part of the free spaces (7) which adjoin the permanent-magnet plates (5, 5', 5") in the tangential direction, the spring force of the spring elements (6, 6', 6") acts predominantly tangentially on side faces (8) of the permanent-magnet plates (5, 5', 5") and the spring elements (6, 6', 6") on one hand lie against the side faces (8) of a permanent-magnet plate (5, 5', 5"), **characterised by** the combination of the following features:
a) the spring elements (6, 6', 6") consist of magnetically non-conductive material,
b) the spring elements (6, 6', 6") on the other hand lie against one of the lands (11) or against a side face (8) of a further permanent-magnet plate (5, 5', 5"), and
c) the permanent-magnet plates (5, 5', 5") on their end located opposite the spring elements (6, 6', 6") are held by the spring elements (6, 6', 6") in a position which is without play in the radial direction.

2. A permanent-magnet rotor according to Claim 1, **characterised in that** the spring elements (6, 6', 6") are metal strips which in cross-section are V-shaped or U-shaped, or metal strips which merge from a V-shape into a U-shape.

3. A permanent-magnet rotor according to Claim 1, **characterised in that** the spring elements are oval or circular metal strips which in cross-section are C-shaped or metal strips which merge from an oval shape into a circular shape.

4. A permanent-magnet rotor according to Claim 2 or 3, **characterised in that** ridges (12) which have resulted during the production of the spring elements (6, 6', 6") are located on the inside (13) of the metal strips.

5. A permanent-magnet rotor according to Claim 1, 2, 3 or 4, **characterised in that** the spring elements (6, 6', 6") are held in the free spaces exclusively in non-positive manner.

6. A permanent-magnet rotor according to Claim 1, 2, 3, 4 or 5, **characterised in that** the permanent-magnet plates (5, 5', 5") are held in the recesses (4) exclusively in non-positive manner.

7. A permanent-magnet rotor according to at least one of the preceding claims, **characterised in that** the number of spring elements (6, 6', 6") corresponds to the number of permanent-magnet plates (5, 5', 5").

8. A permanent-magnet rotor according to at least one of the preceding claims apart from Claim 5, **characterised in that** the number of spring elements (6, 6', 6") corresponds to half the number of the permanent-magnet plates (5, 5', 5").

9. A permanent-magnet rotor according to Claim 8, **characterised in that** the number of lands (11) corresponds to half the number of the permanent-magnet plates (5, 5' 5").

10. A permanent-magnet rotor according to Claim 9, **characterised in that** two permanent-magnet plates (5, 5', 5") are separated from each other alternately by a land (11) or by a spring element (6, 6', 6").

11. A permanent-magnet rotor according to at least one of the preceding claims, **characterised in that** a main bending line (17, 17") of the spring elements (6, 6', 6") is directed radially outwards and the metal sheet legs (14") are directed radially inwards.

12. A permanent-magnet rotor according to Claim 11, **characterised in that** the spring elements (6, 6', 6") within the free space (7, 7') lie radially externally on the laminated core.

13. A permanent-magnet rotor according to at least one of the preceding claims, **characterised in that** edged cross-sectional regions of the spring elements (6, 6') do not lie against the flat side faces (8) of the permanent-magnet plates (5, 5', 5").

14. A permanent-magnet rotor according to at least one of the preceding claims, **characterised in that** the edges of the permanent-magnet plates (5, 5', 5") are provided with rounded portions or bevels.

15. A permanent-magnet rotor according to at least one of the preceding claims, **characterised in that** the spring elements (6, 6', 6") are made of high-grade steel, bronze, beryllium copper or paramagnetic spring steel.

16. An electric motor with a permanent-magnet rotor according to at least one of the preceding claims.

## Revendications

1. Rotor à aimant permanent (1) pour un moteur à courant continu à commutation électronique, comprenant un arbre (2), un empilement de tôles de rotor (3, 3'), qui est porté par l'arbre et présente à proximité de sa périphérie, des évidements (4) rectangulaires totalement fermés sur leur périphérie, s'étendant tangentiellement et destinés à accueillir des plaques d'aimant permanent planes (5, 5', 5"), rotor dans lequel
au moins une plaque d'aimant permanent (5, 5', 5") est respectivement logée dans chaque évidement,
les plaques d'aimant permanent (5, 5', 5") sont maintenues sans jeu, par adhérence, à l'aide d'éléments de ressort (6, 6', 6"),
les évidements (4) présentent des espaces libres (7, 7'), qui se raccordent, dans la direction tangentielle, aux plaques d'aimant permanent (5, 5', 5"), et s'étendent sur la plus grande partie des surfaces latérales (8) des plaques d'aimant permanent (5, 5', 5"),
et l'empilement de tôles de rotor (3, 3') est constitué essentiellement par une zone annulaire (9) radialement extérieure et par une zone de noyau radialement intérieure, la zone annulaire (9) étant, pour une grande partie, délimitée par les évidements (4) et les espaces libres (7, 7'), et étant réalisée d'un seul tenant avec la zone de noyau (10) par l'intermédiaire de minces nervures radiales (11),
les éléments de ressort (6, 6', 6") sont logés individuellement dans une partie des espaces libres (7) se raccordant aux plaques d'aimant permanent (5, 5', 5") dans la direction tangentielle,
la force de ressort des éléments de ressort (6, 6', 6") agit essentiellement de manière tangentielle sur des surfaces latérales (8) des plaques d'aimant permanent (5, 5', 5"),
et les éléments de ressort (6, 6', 6") s'appuient, d'un côté, contre les surfaces latérales (8) d'une plaque d'aimant permanent (5, 5', 5"),
**caractérisé par** la combinaison des propriétés suivantes :
a) les éléments de ressort (6, 6', 6") sont réalisés en un matériau non conducteur sur le plan magnétique,
b) les éléments de ressort (6, 6', 6") s'appuient, de l'autre côté, contre l'une des nervures (11) ou bien contre une surface latérale (8) d'une autre plaque d'aimant permanent (5, 5', 5"), et
c) les plaques d'aimant permanent (5, 5', 5") sont maintenues par les éléments de ressort (6, 6', 6"), à leur extrémité opposée aux éléments de ressort (6, 6', 6"), dans une position sans jeu dans la direction radiale.

2. Rotor à aimant permanent selon la revendication 1,
**caractérisé en ce que** les. éléments de ressort (6, 6', 6") sont des bandes de tôle qui, en section transversale, ont une forme de V, une forme de U, ou bien des bandes de tôle passant d'une forme de V à une forme de U.

3. Rotor à aimant permanent selon, la revendication 1,
**caractérisé en ce que** les éléments de ressort sont des bandes de tôle qui, en section transversale, ont une forme de C, ovale ou circulaire, ou des bandes de tôle passant d'une forme ovale à une forme de circulaire.

4. Rotor à aimant permanent selon la revendication 2 ou la revendication 3, **caractérisé en ce que** des bavures (12), qui ont été produites lors de la fabrication des éléments de ressort (6, 6', 6"), se trouvent sur le côté intérieur (13) des bandes de tôle.

5. Rotor à aimant permanent selon la revendication 1, 2, 3 ou la revendication 4, **caractérisé en ce que** les éléments de ressort (6, 6', 6") sont maintenus uniquement par adhérence dans les espaces libres.

6. Rotor à aimant permanent selon la revendication 1, 2, 3, 4 ou la revendication 5, **caractérisé en ce que** les plaques d'aimant permanent (5, 5', 5") sont maintenues uniquement par adhérence dans les évidements (4).

7. Rotor à aimant permanent selon l'une au moins des revendications précédentes, **caractérisé en ce que** le nombre des éléments de ressort (6, 6', 6") correspond au nombre des plaques d'aimant permanent (5, 5', 5").

8. Rotor à aimant permanent selon l'une au moins des revendications précédentes exceptée la revendication 5,
**caractérisé en ce que** le nombre des éléments de ressort (6, 6', 6") correspond à la moitié du nombre des plaques d'aimant permanent (5, 5', 5").

9. Rotor à aimant permanent selon la revendication 8,
**caractérisé en ce que** le nombre des nervures (11) correspond à la moitié du nombre des plaques d'aimant permanent (5, 5', 5").

10. Rotor à aimant permanent selon la revendication 9,
**caractérisé en ce que** deux plaques d'aimant permanent (5, 5', 5") sont séparées l'une de l'autre alternativement par une nervure (11) ou par un élément de ressort (6, 6', 6").

11. Rotor à aimant permanent selon l'une au moins des revendications précédentes, **caractérisé en ce qu'**une ligne de pliage principale (17, 17'') des éléments de ressort (6, 6', 6") est dirigée radialement vers l'extérieur, et les ailes de tôle (14") sont dirigées radialement vers l'intérieur.

12. Rotor à aimant permanent selon la revendication 11,
**caractérisé en ce que** les éléments de ressort (6, 6', 6"), à l'intérieur de l'espace libre (7, 7'), s'appuient radialement à l'extérieur contre l'empilement de tôles.

13. Rotor à aimant permanent selon l'une au moins des revendications précédentes, **caractérisé en ce que** des zones de section transversale à arêtes vive des éléments de ressort (6, 6') ne s'appuient pas contre les surfaces latérales planes (8) des plaques d'aimant permanent (5, 5', 5").

14. Rotor à aimant permanent selon l'une au moins des revendications précédentes, **caractérisé en ce que** les arêtes des plaques d'aimant permanent (5, 5', 5") sont munies d'arrondis ou de chanfreins.

15. Rotor à aimant permanent selon l'une au moins des revendications précédentes, **caractérisé en ce que** les éléments de ressort (6, 6', 6") sont réalisés en acier spécial surfin, bronze, cuprobéryllium, ou en acier à ressort paramagnétique.

16. Moteur électrique comportant un rotor à aimant permanent selon l'une au moins des revendications précédentes.
